# EUROPÄISCHE PATENTANMELDUNG

(11) **EP 2 537 901 A1**
(43) Veröffentlichungstag der Anmeldung: **26.12.2012**
(21) Anmeldenummer: 12172009.8
(22) Anmeldetag: 14.06.2012
(51) Int. Cl.: C09C 1/36, C09C 3/06, C08K 3/00, D21H 17/18, D21H 17/69, D21H 17/70

(54) **Reaktive anorganisch-organische Composites, deren Herstellung und Verwendung**

(30) Priorität: 22.06.2011 DE 102011105664
(71) Anmelder: bene_fit systems GmbH & Co. KG, 92242 Hirschau (DE)
(72) Erfinder: Kräuter, Reinhard, 92237 Sulzbach-Rosenberg (DE)
(74) Vertreter: Hannke, Christian

(57) **Zusammenfassung**

Die vorliegende Erfindung betrifft Composite bestehend aus einem Träger und mindestens einer in und/oder auf dem Träger zumindest temporär fixierten organischen Komponente, wobei der Träger in mindestens einer Raumrichtung einen Durchmesser von weniger als 10 cm aufweist und die organische Komponente mindestens einen reaktiven Rest aufweist, der dazu geeignet ist, mindestens eine chemische Bindung auszubilden. Weiterhin betrifft die Erfindung ein Verfahren zur Herstellung derartiger Composite sowie deren Verwendung.

## Beschreibung

Die vorliegende Erfindung betrifft Composite bestehend aus einem Träger und mindestens einer in und/oder auf dem Träger zumindest temporär fixierten organischen Komponente, wobei der Träger in mindestens einer Raumrichtung einen Durchmesser von weniger als 10 cm aufweist und die organische Komponente mindestens einen reaktiven Rest aufweist, der dazu geeignet ist, mindestens eine chemische Bindung auszubilden. Weiterhin betrifft die Erfindung ein Verfahren zur Herstellung derartiger Composite sowie deren Verwendung.

Beschrieben werden reaktive anorganisch-organische Composites, deren Herstellung sowie Verwendung. Die Composites bestehen aus einem anorganischen Träger und einer organischen Komponente. Mit reaktiv ist hier gemeint, dass in und/oder auf dem anorganischen Träger organische Komponenten enthalten sind, die in der Lage sind, durch weitergehende Reaktionen chemische Bindungen einzugehen oder zu bilden. Dies kann beispielsweise eine weitergehende Polymerisierung sein oder eine chemische Vernetzung mit einer umgebenden Matrix.

US 3 309 211 beschreibt die Interkalierung von Kaolin mit einer Vielzahl von organischen und anorganischen Verbindungen auf verschiedenen Wegen, optional gefolgt von einer mechanischen Behandlung. In dieser Patentschrift ist auch die Interkalierung von Organo-Stickstoff-Verbindungen wie z.B. Harnstoff in Kaolin genannt. Nicht beschrieben ist allerdings eine nachfolgende chemische Reaktion dieser Verbindungen mit dem vorrangigen Ziel einer Polymerisation und der Bildung eines reaktiven Composites im Sinne der obigen Beschreibung

DE 199 21 472 A 1 bezieht sich auf flammgeschützte Polymerzusammensetzungen. Beschrieben wird eine flammgeschützte, im Wesentlichen halogenfreie thermoplastische oder vernetzbare Polymerzusammensetzung enthaltend:
a) 100 Gew.-Teile (Gewichtsteile) einer thermoplastischen oder vernetzbaren Polymers;
b) 10 bis 200 Gew.-Teile Magnesium, Calcium-, Zink- und/oder Aluminiumhydroxid und / oder deren Doppelhydroxide;
c) 1 bis 50 Gew.-Teile eines organisch interkalierten Schichsilikats

Bei dem beschriebenen interkalierten Schichtsilikat handelt es sich um ein anorganisches Dreischichtsilikat mit längerkettigen organischen Molekülen, wobei diese in den Schichten des Silikates eingelagert sind, dort aber nicht vernetzt vorliegen und auch keine chemischen Verbindungen mit einer umgebenden Matrix eingehen, also nicht reaktiv sind im Sinne der obigen Beschreibung

DE 103 43 130 A1 beschreibt ein Verfahren zur Herstellung modifizierter Zweischicht-Tonminerale, dadurch gekennzeichnet, dass man in einem erste Schritt a) Alkaliacetat und/oder Ammoniumacetat in wässriger Lösung mit dem Zweischicht-Tonmineral vermischt, wodurch das Acetat in den Zweischicht-Tonmineral eingelagert wird und in einem zweiten Schritt b) organische Moleküle mit oder ohne weiteres Lösungsmittel mit dem in Schritt a) erhaltenen Zweischicht-Tonmineral vermischt, wodurch organische Moleküle in den Zweischicht-Tonmineral eingelagert werden und das Acetat ganz oder teilweise durch die organischen Moleküle verdrängt wird.

An den eingelagerten Verbindungen werden keine weiteren Reaktionen durchgeführt, z.B. Polymerisationsreaktionen, mit dem Ziel der Bildung eines reaktiven Composites im Sinne der obigen Beschreibung. Daneben hat das beschriebene Verfahren den entscheidenden Nachteil, dass die Einlagerung der organischen Moleküle zweistufig erfolgen muss (vgl. a) und b)), was mit einem erheblichen Aufwand und erheblichen Kosten verbunden ist.

DE 10 2006 026 965.9 betrifft Komposites , umfassend organische und/oder anorganische Pigmente und/oder Füllstoffe in Form von Mikropartikeln, deren Oberfläche mit Hilfe von Bindemitteln, basierend auf Copolymeren, umfassend als Monomer ein oder mehrere Dicarbonsäuren, und ein oder mehrere Monomere aus der Gruppe der Diamine, Triamine, Dialkanolamine, oder Trialkanolamine, wenigstens teilweise mit fein verteilten Nano-Calciumcarbonatpartikeln beschichtet ist, ein Verfahren zur Herstellung solcher Komposites, wässrige Aufschlämmungen davon und deren Verwendung in der Papierherstellung oder auf dem Gebiet der Farb- und Kunststoffherstellung sowie zur Verwendung der Bindemittel für die Beschichtung der Mikropartikel mit Nano-Calciumcarbonat.

DE 10 2007 004 124.3 betrifft Komposites, umfassend organische und/oder anorganische Pigmente und/oder Füllstoffe in Form von Mikropartikeln, deren Oberfläche mit Hilfe von Bindemitteln, basierend auf Copolymeren, umfassend als Monomer ein oder mehrere Dicarbonsäuren, und ein oder mehrere Monomere aus der Gruppe der Diamine, Triamine, Dialkanolamine, oder Trialkanolamine, wenigstens teilweise mit fein verteilten Nano-Dolomitpartikeln beschichtet ist, ein Verfahren zur Herstellung solcher Komposites, wässrige Aufschlämmungen davon, deren Verwendung sowie die Verwendung der Bindemittel für die Beschichtung der Mikropartikel mit Nano-Dolomit.

In beiden Schriften sind weder Monomere auf Basis von Amiden (z.B. Harnstoff) noch solcher auf Basis von Acryl-Monomeren (Acrylgruppe, CH₂=CH-COR, z.B. Acrylsäure, Acrylsäureester, Methacrylsäuremethylester), noch daraus resultierende Polymerisationsprodukte genannt und es ist auch nicht das Ziel, ein reaktives Composite zu bilden, sondern vielmehr carbonatische Nanopartikel zumindest teilweise auf der Oberfläche zu binden. Darüber hinaus ist auch eine Vernetzung oder Polymerisation entsprechender Produkte mit einer umgebenden Matrix nicht beschrieben.

Nach dem Stand der Technik sind zum Einen entweder nur anorganische Materialien auf Silikatbasis mit eingelagerten nicht polymerisierten organischen Molekülen verfügbar oder anorganische Materialien auf Carbonatbasis, die an der Oberfläche Copolymere und gleichzeitig anorganische Nanopartikel angelagert haben, wobei diese sich an der Oberfläche befindlichen Bestandteile aber ebenfalls nicht reaktiv sind.

Ein reaktives Composite, basierend auf einem a) bevorzugt anorganisch/organischen Material, wobei das anorganische Material bevorzugt eine Si-Verbindung, z.B. ein Silikat und das organische Material aus Amiden als Monomeren besteht, bevorzugt Harnstoff oder Melamin, wobei diese auf dem anorganischen Material oder in den Zwischenschichten eingelagert sind oder beides und zur Reaktion gebracht werden mit sich selbst oder bevorzugt mit Formaldehyd, ist bislang nicht bekannt und verfügbar.

Nicht beschrieben sind weiterhin b) Composites basierend auf einem bevorzugt anorganisch/organischen Material, wobei das anorganische Material bevorzugt eine Si-Verbindung, z.B. ein Silikat der Träger ist und das organische Material ein teilweise vorpolymerisiertes Produkt aus Harnstoff und/oder Melamin mit Formaldehyd, welches bereits in dieser teilweise vorpolymerisierten Form, also reaktionsfähige Polymere mit niedriger Molmasse enthält und in dieser Form auf den Träger aufgebracht wird.

Nicht beschrieben sind weiterhin c) Composites basierend auf einem bevorzugt anorganisch/organischen Material, wobei das anorganische Material bevorzugt eine Si-Verbindung, z.B. ein Silikat der Träger ist und das organische Material auf einem teilweise vorpolymerisierten Material beruht, welches aus Acrylgruppen gebildet wurde bzw. diese in vorpolymerisierter Form, also reaktionsfähige Polymere mit niedriger Molmasse enthält und in dieser Form auf den Träger aufgebracht wird.

Nicht beschrieben sind weiterhin d) Composites basierend auf einem bevorzugt anorganisch/organischen Material, wobei das anorganische Material bevorzugt eine Si-Verbindung, z.B. ein Silikat der Träger ist und das organische Material eine Mischung einer oder mehreren Varianten a) bis c) untereinander oder mit anderen ist, beispielsweise mit Phenolen, Styrolen oder anderen, welche in teilweise vorpolymerisierter Form, also reaktionsfähige Polymere mit niedriger Molmasse enthält und in dieser Form auf den Träger aufgebracht wird.

Die Varianten a) bis d) wären aber von erheblichem Vorteil, um bestimmte Eigenschaften entsprechender anorganisch-organischer Composites , z.B. eine erhöhte Reaktivität in Folgeanwendungen und damit eine erhebliche Steigerung der Funktionalität und ein deutlich weitergehendes Spektrum weitergehender Anwendungsoptionen zu erreichen, was mit den marktverfügbaren Materialien bislang noch nicht erzielt werden kann.

Aufgabe der Erfindung ist es daher reaktive Composites, basierend auf einem anorganisch/organischen Material bereitzustellen, welche eine reaktive Oberfläche aufweisen, um chemische Bindungen mit der sie umgebenden Matrix eingehen zu können.

Weiterhin ist es Aufgabe der Erfindung ein Verfahren zur Herstellung eines solchen Composites bereitzustellen.

Gelöst wird diese Aufgabe durch ein Composite, bestehend aus einem Träger und mindestens einer in und/oder auf dem Träger zumindest temporär fixierten organischen Komponente, wobei der Träger in mindestens einer Raumrichtung einen Durchmesser von weniger als 10 cm aufweist und die organische Komponente mindestens einen reaktiven Rest aufweist, der dazu geeignet ist, mindestens eine chemische Bindung auszubilden. Bevorzugt sind Träger, welche in mindestens einer Raumrichtung einen Durchmesser von weniger als 1 cm, bevorzugt weniger als 1 mm, bevorzugt weniger als 100 µm, bevorzugt weniger als 10 µm, bevorzugt weniger als 1 µm aufweisen.

Bevorzugt sind Composite, bei denen der reaktive Rest eine Polymerisationsreaktion eingehen kann oder während einer Polymerisationsreaktion durch mindestens eine kovalente Bindung in das Polymer integrierbar ist.

Um eine Reaktion mit der umgebenden Matrix eingehen zu können sind Composite bevorzugt, bei denen der reaktive Rest eine reaktive Gruppe aufweist, die dazu geeignet ist, eine Vernetzungsreaktion mit einer das Composite umgebenden Matrix einzugehen.

Besonders bevorzugt sind dabei Composite, deren Träger ausgewählt ist aus einer Gruppe, die eine Si-Verbindung, eine C-Verbindung, eine S-Verbindung, eine O-Verbindung, eine OH-haltige Verbindung, eine P-Verbindung und/oder Mischungen dieser umfasst und bevorzugt mindestens eine Si-Verbindung umfasst. Dabei kann es sich um anorganische Materialien handeln, bei denen eine Si-Verbindung (z.B. Silikat), C-Verbindung (z.B. Carbonat), S-Verbindung (z.B. Sulfat), O-Verbindung (z.B. Oxid), OH-haltige Verbindung (z.B. Hydroxid) oder P-Verbindung (z.B. Phosphat) oder Mischungen oder Kombinationen dieser vorliegen. Besonders bevorzugt sind Silikate.

Bei der organischen Komponente handelt es sich bevorzugt um mindestens eine Verbindung, die neben C-Atomen auch Heteroatome, bevorzugt O- und/oder N-Atome aufweist und besonders bevorzugt mindestens ein Amid, bevorzugt Harnstoff oder Melamin, als Monomer und/oder ein daraus und/oder aus Acrylgruppen enthaltenden Monomeren gebildetes Oligomer und/oder niedermolekulare Reaktionsprodukte von Polycarbonsäuren mit einem multifunktionalen Alkohol mit einer molaren Masse von weniger als 150000g/mol, bevorzugt weniger als 120000g/mol, besonders bevorzugt weniger als 100000g/mol umfasst. Diese sind auf der Oberfläche und/oder in den Zwischenschichten des anorganischen Materials angelagert.

Bevorzugt weist der reaktive Rest der organische Komponente eine chemische Reaktivität aufweist, die es diesem ermöglicht, mit sich selbst oder mit einer anderen reaktiven Gruppe, welche bevorzugt ausgewählt ist aus Hydroxid-, Aldehyd-, Keto-, Carbonsäure-, VinylGruppen, Alkanen, Alkenen oder Alkinen, zyklischen Verbindungen, reaktionsfähigen Monomeren, reaktionsfähigen Oligomeren, reaktionsfähigen Polymeren und/oder Mischungen dieser, besonders bevorzugt aus Amiden und/oder Aldehyden und/oder Acrylaten und/oder niedermolekulare Reaktionsprodukte von Polycarbonsäuren mit einem multifunktionalen Alkohol, eine Bindung einzugehen. Weiterhin sind selbstverständlich auch andere reaktive Synthesekomponenten oder Mischungen mit diesen möglich, sofern diese das Ziel der Schaffung eines reaktiven Composites unterstützen.

Optional ist es auch möglich, dass die organische Komponente weiterhin mindestens eine weitere organische, polymerisierbare Komponente umfasst, welche bevorzugt einen substituierten oder unsubstituierten Phenylrest, einen substituierten oder unsubstituierten Benzylrest, einen substituierten oder unsubstituierten Vinylrest, Styrol oder dessen Derivate und/oder Ethylenoxid oder dessen Derivate umfasst, und welche bevorzugt oligomerisiert ist und/oder ein Oligomer mit einer molaren Masse von weniger als 150000g/mol, bevorzugt weniger als 120000g/mol, besonders bevorzugt weniger als 100000g/mol ist.

In einer weiteren Ausführung kann ein reaktives Composite optional auch ein organisch/organisches Material sein, wobei das erste organische Material (der Träger) jedes organische Material sein kann (z.B. organische Fasern) und das zweite organische Material eines wie oben beschrieben ist. Besonders bevorzugt ist in diesem Fall ein ein Amid, wobei dieses auf der Oberfläche des organischen Materials angelagert ist und zur Reaktion gebracht wird mit sich selbst, bevorzugt aber mit Formaldehyd oder alternativ dazu und ebenfalls bevorzugt ein organisches Material wie unter b,) c) oder d) beschrieben.

Bevorzugt umfasst der Träger eine Cellulosefaser oder einen partikulären anorganischen Partikel.

Überraschender Weise hat sich gezeigt, dass gewünschte Composites auf vergleichsweise einfache und daher preiswerte Weise großtechnisch hergestellt werden können und diese im Vergleich zum Stand der Technik erhebliche Vorteile in verschiedenen Folgeanwendungen zeigen, wie nachfolgend beschriebene Beispiele auch zeigen

Harnstoff ist ein Beispiel für ein oben beschriebenes Amid und damit ein mögliches Monomer, welches in großtechnischen Mengen preiswert verfügbar ist.

Bei geeigneten Druck und/oder Temperaturbedingungen kann dieses bereits mit sich selbst polymere Reaktionsprodukte bilden, welche dann weiter reagieren können. Beispielsweise kondensiert Harnstoff beim Erhitzen über den Schmelzpunkt unter Abspaltung von Ammoniak zu Biuret:

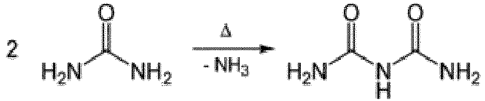

Weiterhin sei hier die Herstellung von Melamin durch Trimerisierung von Harnstoff genannt. Es existieren Hochdruck- (> 8 MPa) und Niederdruckverfahren (ca. 1 MPa).

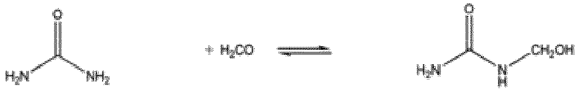

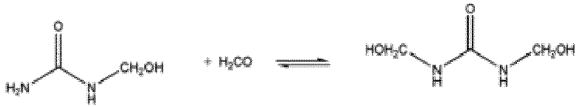

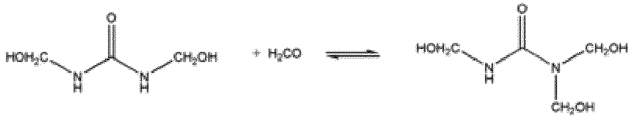

Vernetzungsreaktionen von Harnstoff (und seinen Folgeprodukten) sind auch mit anderen Materialien möglich, hier ist beispielsweise die Reaktion mit Aldehyden zu nennen, speziell die Reaktion von a) Harnstoff mit Formaldehyd:
n · H₂N-CO-NH₂ + n · O=CH₂ → [-HN-CO-NH-CH₂-]ₙ + n-1 · H₂O n · Harnstoff + n · Formaldehyd → Ausschnitt aus Aminoplastkette + n-1 · Wasser
und b) die Reaktion von Melamin mit Formaldehyd:

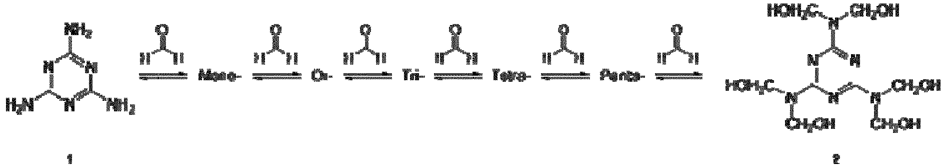

Herrmann J. Becher beschreibt in Chemische Berichte, Weinheim, Jahrgang 1956, Band 89, S. 1593-1601 in "Infrarotspektroskopische Untersuchung der Reaktionsprodukte aus Harnstoff und Formaldehyd, I. Die Methylenharnstoffe" u.a. die Synthese und die Reaktionsprodukte aus Harnstoff und Formaldehyd aus wässriger Lösung. Dabei werden u.a. Methylendiharnstoff, Dimethylentriharnstoff, Trimethylentetraharnstoff und Pentamethylenhexaharnstoff synthetisiert und mittels IR-Spektroskopie nachgewiesen. Darin ist auch erwähnt, dass in Abhängigkeit der Reaktionsführung und der Mischungsverhältnisse der Reaktionspartner Kondensationsprodukte resultieren, die eine ausreichende Anzahl Methylolgruppen enthalten, die über eine Kondensationsreaktion auch eine spätere Härtung ermöglichen.

Als anorganische Komponente sind beispielsweise geeignet CaCO₃ (natürlich/synthetisch), Dolomit, Talkum, Glimmer, Wollastonit, Kieselerde, Kieselgur, Kieselsäure, Aluminiumsilikate, Chlorit, Ton, Bentonit, Montmorillonit, Aluminiumhydroxid, Magnesiumhydroxid, Bariumsulfat, Zinkoxid, Gips (natürlich/synthetisch), Hydrotalcit, Quarz, Feldspat, Glasfasern, Glaspartikel, Aluminiumoxid, Mullit, Keramik, bevorzugt jedoch Zweischichtsilikate wie z.B. Halloysit, Nakrit, Dickit, meist bevorzugt Kaolin, kalziniertes Kaolin und TiO₂ (Anatas und/oder Rutil), wobei alle Materialien in jeder Korngröße (von z.B. 10 nm bis 10 cm) und jeder Morphologie (Plättchen, Fasern, Kugeln usw.), alleine oder in Mischung mit anderen und ggf. mit weiteren Zusätzen zum Einsatz kommen können.

Als erste organische Komponente (Träger) der weiteren Ausführung können z.B. Holz (Späne/Fasern), Zellstoff, Holzstoff, Sisal, Kokosfasern, expandiertes Polystyrol, organische Mikrohohlkugeln, Expancel usw. eingesetzt werden.

Beschreibung der bevorzugten anorganischen Komponenten:

**Tabelle 1. Beschreibung der anorganischen Komponente (Träger)**

| **Parameter** | **Einheit** | **Halloysit Nakrit Dickit** | **Kaolin** | **Kalz. Kaolin** | **TiO₂** |
|---|---|---|---|---|---|
| Mineralanteil (kristalline Phasen) | Ma-% | >5 | >5 | <30 | >5 |
| Mineralanteil (kristalline Phasen) bevorzugt | Ma-% | >25 | >25 | <20 | >25 |
| Mineralanteil meist bevorzugt | Ma-% | >60 | >60 | <10 | >50 |
| Amorpher Anteil | Ma-% | <50 | <50 | >25 | <50 |
| Amorpher Anteil meist bevorzugt | Ma-% | <25 | <25 | >50 | <25 |
| Korngröße 1, < 50 µm | Ma-% | >1 | >1 | >1 | >1 |
| Korngröße 1, < 50 µm, bevorzugt | Ma-% | >50 | >50 | >50 | >50 |
| Korngröße 2, < 50 µm | Ma-% | >1 | >1 | >1 | >1 |
| Korngröße 2, < 50 µm bevorzugt | Ma-% | >50 | >50 | >50 | >50 |
| Aspektverhältnis | | ≥1 | ≥1 | ≥1 | ≥1 |
| Aspektverhältnis meist bevorzugt | | >3 | >3 | ≥1 | ≥1 |
| Weißgrad, R 457 | % | >10 | >10 | >10 | >10 |
| Weißgrad, R 457 meist bevorzugt | % | >60 | >60 | >75 | >80 |
| Gelbwert, Elrepho | | <30 | <30 | <30 | <30 |
| Feuchtigkeit (100 °C) | Ma-% | <70 | <70 | <70 | <70 |
| Feuchtigkeit (100 °C), meist bevorzugt | Ma-% | <50 | <50 | <50 | <50 |
| Chem. Inhalt (außer Al, Si, H, O, Ti, Zr) | Ma-% | <60 | <60 | <60 | <60 |
| Chem. Inhalt (außer Al, Si, H, O, Ti, Zr), meist bevorzugt | Ma-% | <40 | <40 | <40 | <40 |
| BET | m²/g | >0,1 | >0,1 | >0,1 | >0,1 |
| BET, meist bevorzugt | m²/g | >0,5 | >0,5 | >0,5 | >0,5 |
| Oberflächenbeschichtung | | möglich | möglich | möglich | Möglich |

| | | | | | |
|---|---|---|---|---|---|
| Korngröße 1 = gemessen mittels Sedimentationsmethode, z.B. Sedigraph Korngröße 2 = gemessen mittels Laserbeugung, z.B. mittels Cilas Oberflächenbeschichtung: "möglich" heißt hier, dass die Materialien zusätzlich eine Oberflächenbeschichtung haben können, beispielsweise SiO₂, Al₂O₃, Zr₂O₃ oder Mischungen dieser. | | | | | |

Das erfindungsgemäße Verfahren zur Herstellung eines Composites bestehend aus einem Träger und mindestens einer in und/oder auf dem Träger zumindest temporär fixierten organischen Komponente, wobei der Träger in mindestens einer Raumrichtung einen Durchmesser von weniger als 10 cm aufweist zeichnet sich dadurch aus, dass der Träger in trockener oder suspendierter Form mit einer trockenen, flüssigen, suspendierten oder gelösten organische Komponente mit mindestens einem reaktiven Rest, der dazu geeignet ist, mindestens eine chemische Bindung auszubilden, versetzt wird, um diese an den Träger anzulagern und/oder in den Träger einzulagern und die organische Komponente anschließend auf dem Träger gebunden wird.

Dabei sind mehrere verschiedene Varianten möglich.

### 1. Herstellung der Composites unter Verwendung von Monomeren

Bevorzugt wird als organische Komponente ein Monomer oder Oligomer verwendet, das bevorzugt neben C-Atomen auch Heteroatome, bevorzugt O- und/oder N-Atome aufweist und besonders bevorzugt mindestens ein Amid, bevorzugt Harnstoff oder Melamin, als Monomer und/oder ein daraus und/oder aus Acrylgruppen enthaltenden Monomeren gebildetes Oligomer und/oder niedermolekularen Reaktionsprodukten von Polycarbonsäuren mit einem multifunktionalen Alkohol mit einer molaren Masse von weniger als 5000 150000 g/mol, bevorzugt weniger als 120000g/mol, besonders bevorzugt weniger als 100000g/mol umfasst.

Weiter bevorzugt ist ein Verfahren zur Herstellung eines Composites bei dem als organische Komponente ein Monomer oder Oligomer verwendet wird und dieses unter Zusatz einer weiteren Komponente eine Polymerisationsreaktion eingeht und auf der Oberfläche des Trägers fixiert wird.

Beispielsweise kann trockenes oder feuchtes Kaolin eingesetzt werden, so wie auch trockener oder gelöster Harnstoff und die daraus folgende Mischung aus Kaolin und Harnstoff entweder nach einer kurzen oder einer längeren Reaktionszeit weiterbehandelt werden.

Bei der Weiterbehandlung nach einer kurzen Reaktionszeit ist der Harnstoff vorwiegend an der Oberfläche angelagert. Im Fall einer längeren Reaktionszeit ist der Harnstoff vorwiegend in den Kaolinzwischenschichten eingelagert.

Die Kaolin-Harnstoff-Mischung kann danach entweder in feuchtem oder getrocknetem Zustand weiterverarbeitet werden, z.B. mit gasförmigem oder flüssigem Formaldehyd oder auch ohne Formaldehyd nur thermisch behandelt werden, um so die gewünschten Composites zu bilden. In allen Fällen bietet sich an, möglicherweise enthaltenes Wasser unmittelbar bei oder nach erfolgter Reaktion zu entfernen, z.B. mittels Wirbelschicht bzw. durch Mahltrocknung.

Für die Kaolin-Harnstoffmischungen (und in entsprechenden Verfahrensvarianten auch für die Zumischung von Formaldehyd) bieten sich bei hohem Wasseranteil eher Hochleistungsdispergierer und bei niedrigem Wasseranteil alternativ eher Intensiv- oder Zwangsmischer an, sowie Kneter, bevorzugt Extruder. Für die Trocknung bzw. Mahltrocknung (und in entsprechenden Verfahrensvarianten auch für die Zumischung von Formaldehyd und paralleler Reaktion) bieten sich z.B. Mahl-, Sprüh-, Band-, Wirbelschicht-, oder Fließbetttrockner an. Eine parallele Reaktion mit Formaldehyd kann z.B. in der Wirbelschicht erfolgen, in Pulvermischern oder mittels Desagglomeratoren.

Nachfolgend einige Verfahrensvarianten. Hierbei gelten folgende Definitionen:

| | | | | | |
|---|---|---|---|---|---|
| HS | : Harnstoff | tr | : trocken | F(12) : | Feuchtigkeit, 12 Ma-% |
| K | : Kaolin | L | : Lösung | f | : flüssig |
| T | : Temperatur | FA | : Formaldehyd | g | : gasförmig |

Beispiele zur möglichen Reaktionsführungen (ohne Anspruch auf Vollständigkeit)

Kaolin mit Harnstoff, vorwiegend an der Oberfläche und nachfolgende Temperatur und/oder FA-Gasphasenreaktion
1: K (tr) + HS (L) mischen, sofort trocknen, pulverisieren, T (>50°C)
2: K (tr) + HS (L) mischen, sofort trocknen, pulverisieren, FA (g)
3: K F(30) + HS (tr) mischen, sofort trocknen, pulverisieren, T (>50°C)
4: K F(30) + HS (tr) mischen, sofort trocknen, pulverisieren, FA (g)
5: K F(12) + HS (tr) mischen, sofort trocknen, pulverisieren, T (>50°C)
6: K F(12) + HS (tr) mischen, sofort trocknen, pulverisieren, FA (g)

Kaolin mit Harnstoff, vorwiegend in den Kaolin-Zwischenschichten und nachfolgende Temperatur und/oder FA-Gasphasenreaktion
7: K (tr) + HS (L) mischen, lagern > 1 h, trocknen, pulverisieren, T (>50°C)
8: K (tr) + HS (L) mischen, lagern >1h, trocknen, pulverisieren, FA (g)
9: K F(30) + HS (tr) mischen, lagern >1h, trocknen, pulverisieren, T (>50°C)
10: K F(30) + HS (tr) mischen, lagern >1h, trocknen, pulverisieren, FA (g)
11: K F(12) + HS (tr) mischen, lagern >1h, trocknen, pulverisieren, T (>50°C)
12: K F(12) + HS (tr) mischen, lagern >1h, trocknen, pulverisieren, FA (g)

Kaolin mit Harnstoff und Formaldehyd aus einer Flüssigreaktion, vorwiegend oberflächennah, mit anschließender Trocknung für die trockene Weiterverarbeitung
13: K (tr) + HS (L) + FA (f/g) mischen, sofort trocknen, pulverisieren
14: K F(12) + HS (tr/L) + FA (f/g) mischen, sofort trocknen, pulverisieren
15: K F(30) + HS (tr/L) + FA (f/g) mischen, sofort trocknen, pulverisieren
16: K F(60) + HS (tr/L) + FA (f/g) mischen, sofort trocknen, pulverisieren

Kaolin mit Harnstoff und Formaldehyd aus einer Flüssigreaktion, vorwiegend oberflächennah, ohne anschließende Trocknung für die flüssige Weiterverarbeitung
17: K (tr) + HS (L) + FA (f/g) mischen
18: K F(12) + HS (tr/L) + FA (f/g) mischen
19: K F(30) + HS (tr/L) + FA (f/g) mischen
20: K F(60) + HS (tr/L) + FA (f/g) mischen

Diese Aufstellung soll zeigen, dass eine Vielzahl an Prozessschritten und deren Kombinationen möglich ist und die Liste entsprechend verlängert werden kann, z.B. auch durch die Option, dass Prozessschritte auch räumlich und zeitlich voneinander getrennt stattfinden können.

Weitere Vorteile und Ausführungsformen ergeben sich aus den beigefügten Figuren und den Beispielen:
In den Figuren zeigt:
   - Fig. 1: ein Röntgendiffraktogramm von unbehandeltem Kaolin (Beispiel 0);
   - Fig. 2: ein IR-Spektrogramm von unbehandeltem Kaolin (Beispiel 0);
   - Fig. 3: ein Röntgendiffraktogramm von mit wässriger Harnstofflösung versetztem Kaolin nach umgehender Trocknung (Probenbezeichnung "HSO", Beispiel 1);
   - Fig. 4: ein IR-Spektrogramm von mit wässriger Harnstofflösung versetztem Kaolin nach umgehender Trocknung (Probenbezeichnung "HSO", Beispiel 1);
   - Fig. 5: ein Röntgendiffraktogramm von über 72 h mit wässriger Harnstofflösung versetztem Kaolin nach anschließender Trocknung (Probenbezeichnung "HSI", Beispiel 2);
   - Fig. 6: ein IR-Spektrogramm von über 72 h mit wässriger Harnstofflösung versetztem Kaolin nach anschließender Trocknung (Probenbezeichnung "HSI", Beispiel 2);
   - Fig. 7: ein IR-Spektrogramm einer mehrfach mit Wasser gewaschen Probe von mit wässriger Harnstofflösung versetztem Kaolin "HSO" nach anschließender Trocknung (Beispiel 5);
   - Fig. 8: ein IR-Spektrogramm einer mehrfach mit Wasser gewaschen Probe von mit wässriger Harnstofflösung versetztem Kaolin "HSI" nach anschließender Trocknung (Beispiel 5);
   - Fig. 9: ein IR-Spektrogramm einer mit Formaldehyd versetzten Probe von mit wässriger Harnstofflösung versetztem Kaolin "HSO" nach anschließender Trocknung (Probenbezeichnung "K4-HSO-FA", Beispiel 6);
   - Fig. 10: ein IR-Spektrogramm einer mit Formaldehyd versetzten Probe von mit wässriger Harnstofflösung versetztem Kaolin "HSI" nach anschließender Trocknung (Probenbezeichnung "K5-HSI-FA", Beispiel 6);
   - Fig. 11: ein IR-Spektrogramm einer mehrfach mit Wasser gewaschen Probe einer mit Formaldehyd versetzten Probe von mit wässriger Harnstofflösung versetztem Kaolin "K4-HSO-FA" nach anschließender Trocknung (Probenbezeichnung "HSO-FA-(4)-H₂O", Beispiel 7); und
   - Fig. 12: ein IR-Spektrogramm einer mehrfach mit Wasser gewaschen Probe einer mit Formaldehyd versetzten Probe von mit wässriger Harnstofflösung versetztem Kaolin "K5-HSI-FA" nach anschließender Trocknung (Probenbezeichnung "HSI-FA-(5)-H₂O", Beispiel 7).

Die Röntgendiffraktogramm wurden mittels Röntgendiffraktion einer Pulverprobe mittels Siemens Diffraktometer D 5000 gemessen, die IR-Spektrogramme durch IRspektroskopische Untersuchung einer Pulverprobe mit einer ATR-Einheit.

### Beispiel 0

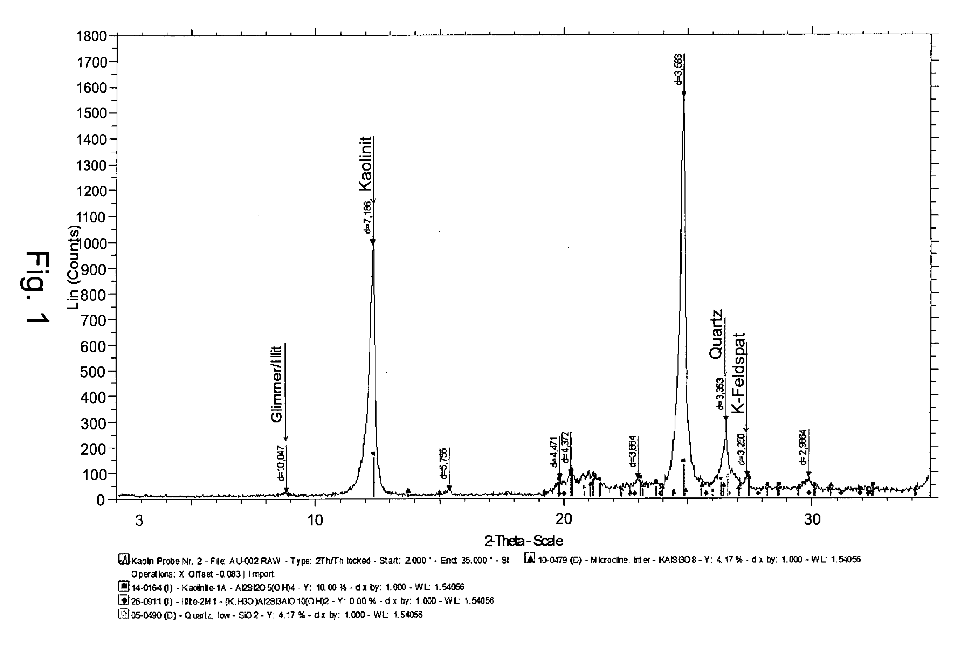

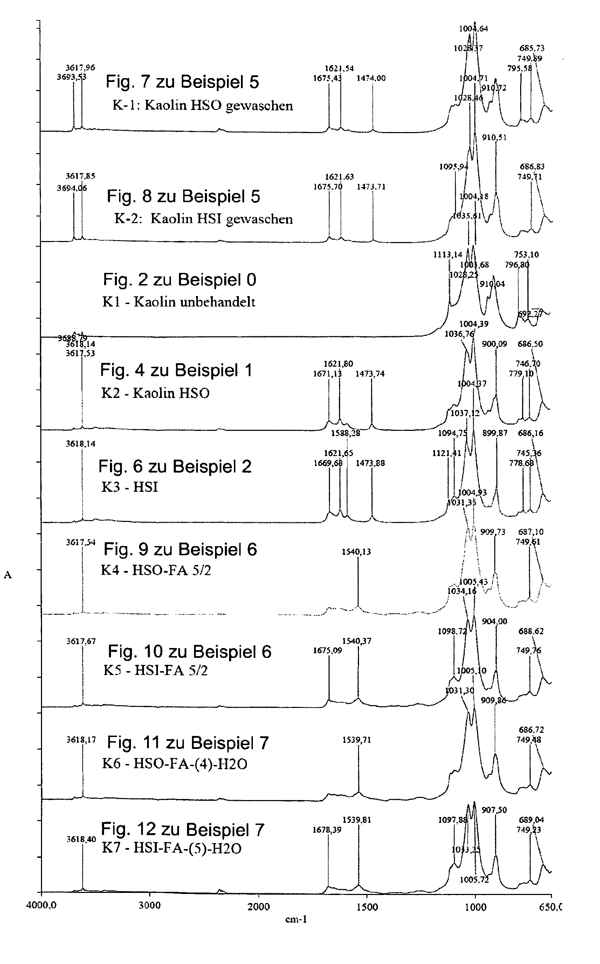

Unbehandeltes Kaolin wird sowohl röntgenographisch (Fig. 1) als auch IR-spektroskopisch (Fig. 2) untersucht. Das Röntgenbeugungsdiagramm zeigt den für Kaolin typischen Peak bei 7 A (Angström). Das IR-Spektrum zeigt keinerlei Banden im Bereich von 1300-2000 Wellenzahlen. Diese Untersuchungen dienen als Vergleich für die nachfolgend beschriebenen Reaktionsprodukte.

### Beispiel 1

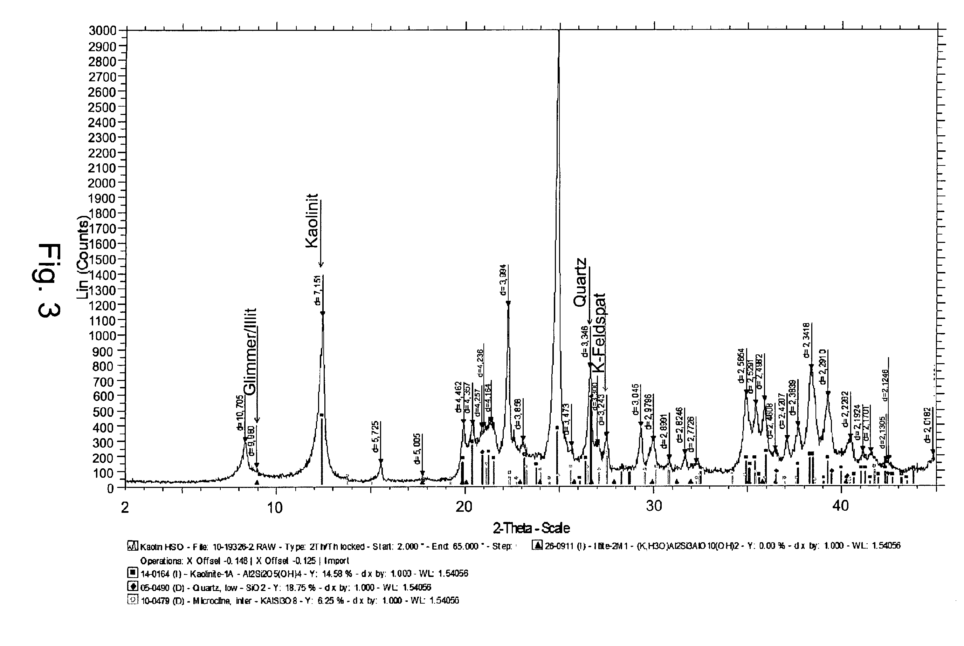

100 g Kaolinpulver werden mit 30 ml gesättigter wässriger Harnstofflösung versetzt, danach intensiv gemischt, umgehend bei 70°C getrocknet und analysiert. Die Röntgendiffraktion (Fig. 3) zeigt nahezu keine Weitung der Gitterabstände, das IR-Spektrum (Fig. 4) zeigt Banden bei 1470 und im Bereich von 1600-1700 Wellenzahlen.

Durch die beschriebene Vorgehensweise resultiert also ein Material, bei welchem der Harnstoff vorwiegend auf der Oberfläche der Kaolinpartikel verteilt ist (Materialbezeichnung HSO). Nur ein sehr geringer Teil ist in den Kaolinschichten interkaliert (10 A).

### Beispiel 2

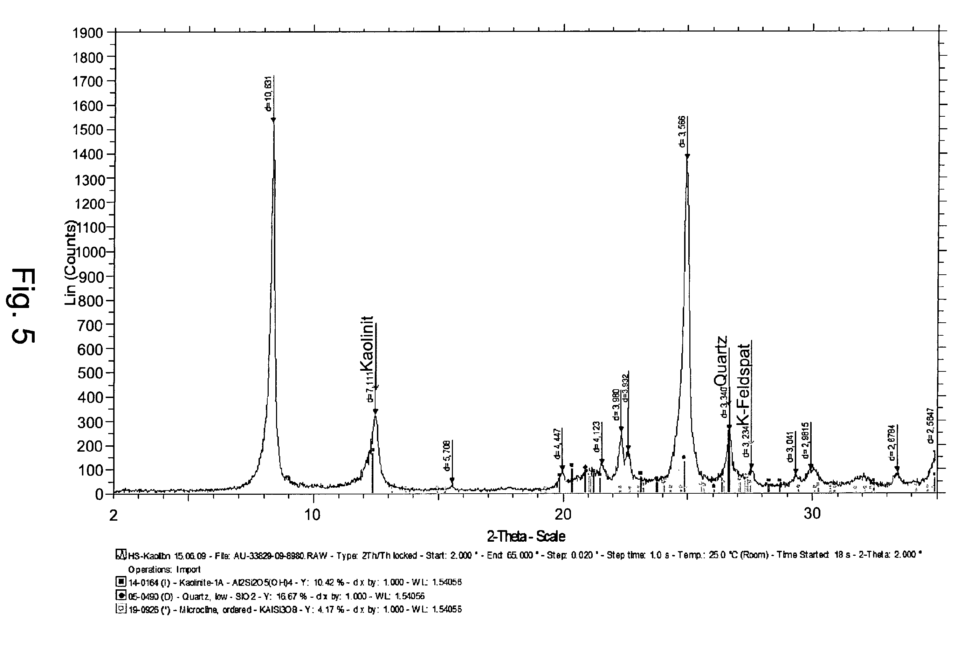

100 g Kaolinpulver werden mit 30 ml gesättigter Harnstofflösung versetzt, danach intensiv gemischt und verschlossen über 72 h bei 50°C gehalten. Danach wird bei 70°C getrocknet und analysiert. Die Röntgendiffraktion (Fig. 5) zeigt eine Weitung der Gitterabstände, zu erkennen durch ein deutliches Signal bei 10 A bei gleichzeitiger Abnahme des Signals bei 7 A. Das IR-Spektrum (Fig. 6) zeigt Banden bei 1470 und im Bereich von 1600-1700 Wellenzahlen.

Durch die beschrieben Vorgehensweise resultiert ein Material, bei welchem der Harnstoff vorwiegend in den Kaolinschichten interkaliert ist (Materialbezeichnung HSI). Nur ein Teil ist auf der Oberfläche der Kaolinpartikel verteilt.

### Beispiel 3

100 g Kaolin mit einer Feuchtigkeit von 30 Ma-% werden mit 15 g Harnstoffpulver intensiv gemischt und umgehend bei 70°C getrocknet. Das Produkt ist röntgenographisch und IR-spektroskopisch nahezu identisch zu Material aus Beispiel 1. Es resultiert ein Material, bei welchem der Harnstoff vorwiegend auf der Oberfläche der Kaolinpartikel verteilt ist. Nur ein geringer Teil ist in den Kaolinschichten interkaliert.

### Beispiel 4

100 g Kaolin mit einer Feuchtigkeit von 30 Ma-% werden mit 15 g Harnstoffpulver intensiv gemischt und verschlossen über 72 h bei 50°C gehalten. Danach wird bei 70°C getrocknet. Das Produkt ist röntgenographisch und IR-spektroskopisch nahezu identisch zu Material aus Beispiel 2. Es resultiert ein Material, bei welchem der Harnstoff vorwiegend in den Kaolinschichten interkaliert ist, ein geringerer Teil ist auf der Oberfläche der Kaolinpartikel verteilt ist.

### Beispiel 5

Ein Teil von Material aus Beispiel 1 und Bespiel 2 wird jeweils dreimal mit der zehnfachen Menge (m/m) an Wasser suspendiert, jeweils 2 h stehen gelassen, zentrifugiert und die überstehende Klarphase dekantiert. Die gewaschenen Kaolinproben werden danach bei 80 °C getrocknet, pulverisiert und IR-spektroskopisch untersucht (Produkt aus Material von Beispiel 1: Fig. 7: HSO-H₂O; Produkt aus Material von Beispiel 2: Fig. 8: HSI-H₂O). In beiden Fällen wird der Harnstoff nahezu vollständig von dem Kaolin entfernt. Im IR-Spektrum treten deutlich reduzierte Banden im Beriech von 1400-1700 Wellenzahlen auf.

### Beispiel 6

Ein Teil von Material aus Beispiel 1 und Bespiel 2 wird jeweils in einem geschlossenen Gefäß mit gasförmigem Formaldehyd versetzt und über einen Zeitraum von 4 h bei 80 °C gehalten. Nach dem Abkühlen werden beide Proben IR-spektroskopisch untersucht (Produkt aus Material von Beispiel 1: Fig. 9: K4-HSO-FA 5/2, Produkt aus Material von Beispiel 2: Fig. 10: K5-HSI-FA 5/2). In beiden Fällen verschwindet die Aldehyd-Bande um 1475 und es ändert sich auch das Bandenmuster im Bereich von 1500-1700 Wellenzahlen. Dies wird auf die Reaktion des Harnstoffs mit Formaldehyd zurückgeführt.

### Beispiel 7

Ein Teil der Reaktionsprodukte aus Beispiel 6 wird jeweils dreimal mit der zehnfachen Menge (m/m) an Wasser suspendiert, jeweils 2 h stehen gelassen, zentrifugiert und die überstehende Klarphase dekantiert. Die gewaschenen Kaolinproben werden danach bei 80 °C getrocknet, pulverisiert und IR-spektroskopisch untersucht (Produkt aus Material von Beispiel 1: Fig. 11: HSO-FA-(4)-H₂O; Produkt aus Material von Beispiel 2: Fig. 12: HSI-FA-(5)-H₂O). Im IR-Spektrum bleibt das Bandenmuster in beiden Fällen erhalten. Mit der in Beispiel 7 beschriebenen Vorgehensweise hat sich also ein nicht wasserlösliches Reaktionsprodukt gebildet. Das Ergebnis aus Beispiel 8 unterscheidet sich wesentlich von dem Ergebnis aus Beispiel 5, bei welchem sämtlicher Harnstoff durch die Behandlung mit Wasser entfernt wurde.

### Beispiel 8

Ein Teil von Material aus Beispiel 1 und Beispiel 2 wird jeweils in einem geschlossenen Gefäß über einen Zeitraum von 4 h bei 80 °C gehalten. Nach dem Abkühlen werden beide Proben IR-spektroskopisch untersucht. In beiden Fällen kommt es zu einem IR-Spektrum vergleichbar Beispiel 7. Dies wird auf eine Kondensationsreaktion des Harnstoffs mit sich selbst zurückgeführt.

Die Beispiele zeigen also, dass die gewünschten reaktiven Composites aus den Monomeren hergestellt werden können und dass dazu eine Vielzahl möglicher Wege besteht.

### 2. Herstellung der Composites unter Verwendung teilweise vorpolymerisiertes Produkte

Daneben ist ein Verfahren zur Herstellung eines Composites bevorzugt, bei welchem als reaktive organische Komponente ein Oligomer oder Vorpolymer verwendet wird und dieses durch Trocknung auf der Oberfläche des Trägers fixiert wird.

Beispiele vorpolymerisierter Produkte, also reaktiver Polymere mit niedriger Molmasse:
a) reaktive Harnstoff-Formaldehyd-Reaktionsprodukte (UF-Polymere)
b) reaktive Melamin-Formaldehyd-Reaktionsprodukte (MF-Polymere)
c) reaktive Acrylat-Polymere und/oder niedermolekulare Reaktionsprodukte von Polycarbonsäuren mit einem multifunktionalen Alkohol
d) reaktive Phenol-Polymere

Sowie allen Mischungen der zuvor genannten mit sich selbst in jedem Verhältnis und / oder anderen organischen oder anorganischen Materialien.

Darreichungsformen der oben beschriebenen Polymere a) bis d):

Entweder flüssig, z.B. in Mischung mit Wasser, wobei die Polymere bevorzugt in einer Partikelgröße vorliegen, die so gewählt ist, dass die Mischung klar erscheint oder nur wenig trüb. Der Polymergehalt kann von 1-99 Ma-% bezogen auf die Mischung reichen, bevorzugt 2-80, weiter bevorzugt 5-70 Ma-%.

Weiterhin ist in einer Ausführungsform bevorzugt, dass auf dem Träger neben der organische Komponente mit mindestens einen reaktiven Rest mindestens ein Additiv angeordnet ist, welches bevorzugt nicht durch kovalente Bindung an den Träger gebunden ist. In einer Variante können zusätzlich z.B. Pigmente, Additive, Füllstoffe auf dem Träger gebunden sein. Diese können die Eigenschaften des Composites weiter modifizieren und z.B. die Farbe auf spezielle Wünsche anpassen. Weiterhin können die Additive die Polarität, Löslichkeit, Schereigenschaften, Rieselfähigkeit, Haptik, Opazität, das spezifische Gewicht und andere sowie Kombinationen davon beeinflussen.

Um das Additiv aufzubringen, kann es beispielsweise Mono-, Oligo- oder Polymer-Wassermischungen beigemischt werden. Die Additive können sowohl organisch als auch anorganisch sein.

Eine weitere Darreichungsform der oben beschriebenen Polymere a) bis d) ist die Bereitstellung dieser in Form feiner Pulver, z.B. sprühgetrockneter oder gemahlener und ggf. klassierter Pulver, in einer Korngröße von 1 nm bis 10 mm, bevorzugt von 10 nm bis 1000 µm.

In einer Variante können den flüssigen Polymeren, bevor diese getrocknet und gemahlen bzw. zu Pulvern versprüht werden auch andere Inhaltsstoffe beigemischt werden, die sowohl organisch als auch anorganisch sein können wie z.B. Pigmente, Additive, Füllstoffen Nachfolgend einige Varianten zur Herstellung reaktiver anorganisch-organischer Composites

### Variante 1

Flüssige Polymermischungen wie oben beschrieben können trockenen Trägermaterialien zugegeben und diese Mischungen intensiv gemischt werden, wobei die Menge der flüssigen Harzmischung so gewählt wird, dass eine feuchte, krümelige Trägermaterial-PolymerMischung resultiert und diese anschließend schonend getrocknet und ggf. pulverisiert wird. Der Trägermaterialanteil dieser Mischungen kann 99 bis 50 Ma-% betragen, der Anteil der flüssigen Polymermischung kann 1 bis 50 Ma-% betragen. Die Trocknungstemperatur und - dauer wird so gewählt, dass die Polymermischung eine Restreaktivität beibehält.

### Variante 2

Trockene Trägermaterialien können flüssigen Polymermischungen wie oben beschrieben zugegeben und diese Mischungen intensiv gemischt werden, wobei die Menge der trockenen Trägerkomponente so gewählt wird, dass eine flüssige Trägermaterial-PolymerMischung resultiert und diese anschließend schonend getrocknet und ggf. pulverisiert, bevorzugt sprühgetrocknet werden. Der Trägermaterialanteil dieser Mischungen kann 50 bis 1 Ma-% betragen, der Anteil der flüssigen Polymermischung kann 99 bis 50 Ma-% betragen. Die Trocknungstemperatur und -dauer wird so gewählt, dass die Polymermischung eine Restreaktivität beibehält.

### Variante 3

Trockene Polymerpulver wie oben beschrieben können mit trockenen Trägermaterialien im Massenverhältnis 1:99 bis 99:1 gemischt werden, wobei für die Herstellung entsprechender Mischungen bevorzugt Verfahren mit hohen Scherkräften zum Einsatz kommen, beispielseise Stiftmühlen.

Anwendungen, der reaktiven anorganisch-organischen Composites

### Beispiel 1: UF-beschichteter Kaolin als Füllstoff zur Festigkeitssteigerung von Papier:

Dazu werden 100 g trockenes Kaolin (z.B. FP 80, Fa. Gebrüder Dorfner, Hirschau) mit 15 g UF-Harz (z.B. Kaurit 210, BASF) versetzt und intensiv gemischt, danach schonend getrocknet und pulverisiert. Aus dem resultierenden Produkt werden auf dem Laborblattbildner (Rapid Köthen) Papiermuster (soll: 80 g/m²) hergestellt. Parallel dazu wird Papier mit unbeschichtetem Kaolin hergestellt. Die Papiere werden danach bei unterschiedlichen Temperaturen kalandriert (Kalander, Stahl/Stahl, a): 120°C-10N/cm²-1 m/min b): 165°C-10N/cm²-1m/min

**Tabelle 2: Messwerte Beispiel 1: 120°C-10 N/cm²-1 m/min**

| | Asche, Ma-% | Blattgewicht g/m² | Bruchwiderstand, N |
|---|---|---|---|
| Standard 30 % | 30,8 | 83 | 27,8 |
| Standard 35 % | 36,0 | 80 | 24,9 |
| VP FP80 K210-15, 30 % | 29,6 | 77 | 31,2 |
| VP FP80 K210-15, 35 % | 34,7 | 77 | 26,3 |

### Ergebnis:

Bei jeweils vergleichbarem Ascheanteil und trotz niedrigerem Blattgewicht nimmt der Bruchwiderstand bei soll 30 % Aschenanteil von 27,8 N auf 31,2 N und bei soll 35 % Aschenanteil von 24,9 N auf 26,3 N bei Verwendung der organisch-anorganischen Composites im Vergleich zum unbehandelten Kaolin deutlich zu.

**Tabelle 3: Messwerte Beispiel 1: 165°C-10 N/cm²-1 m/min**

| | Asche, Ma-% | Blattgewicht g/m² | Bruchwiderstand, N |
|---|---|---|---|
| Standard 30 % | 30,6 | 77 | 28,6 |
| Standard 35 % | 32,2 | 71 | 24,4 |
| VP FP80 K210-15, 30 % | 32,2 | 77 | 36,0 |
| VP FP80 K210-15, 35 % | 34,8 | 78 | 29,2 |

### Ergebnis:

Trotz etwas höherem Ascheanteil und vergleichbarem Blattgewicht nimmt der Bruchwiderstand bei soll 30 % Aschenanteil von 28,6 N auf 36,0 N und bei soll 35 % Aschenanteil von 24,4 N auf 29,2 N bei Verwendung der organisch-anorganischen Composites im Vergleich zum unbehandelten Kaolin deutlich zu.

### Die Festigkeitszunahme der bei 165°C kalandrierten Muster ist höher als die der bei 120°C kalandrierten Muster. Die Festigkeiten unter Verwendung der organisch-anorganischen Composites sind in allen Fällen höher als bei den Vergleichsmustern. Die zunehmende Festigkeit bei höherer Kalandertemperatur wird auf die vorhandene Reaktivität und das druck-und temperaturinitiierte Aushärten der Harzbeschichtung zurückgeführt. Sämtliche Effekte werden mit der erfindungsgemäßen Reaktivität begründet.

### Beispiel 2: UF-beschichteter kalzinierten Kaolin als Füllstoff zur Festigkeitssteigerung und Harzeinsparung von Dekorpapier

Dazu werden 100 g trockenes kalziniertes Kaolin (z.B. Dorkafill H, Fa. Gebrüder Dorfner, Hirschau) mit 25 g UF-Harz (z.B. Kaurit 210, BASF) versetzt und intensiv gemischt, danach schonend getrocknet und pulverisiert. Aus dem resultierenden Produkt werden auf dem Laborblattbildner (Rapid Köthen) Dekorpapiermuster (70 g/m²) hergestellt. Der Sollaschegehalt beträgt 30 Ma-% TiO₂ (Vergleichsprobe). In den Versuchspapiermustern wurden 15 % des enthaltenen TiO₂ durch unbehandeltes kalziniertes Kaolin (DKF H ohne) bzw. organisch modifiziertes kalziniertes Kaolin (DKF H 25 %) ausgetauscht. Die Papiermuster wurden nicht kalandriert.

**Tabelle 4: Messwerte Beispiel 2**

| Muster | Papiergewicht | Ascheanteil | Nassbruchkraft | Trockenbruchkraft | Harzaufnahme |
|---|---|---|---|---|---|
| | g/m² | Ma-% | N | N | g/m² |
| Vergleich* | 70 | 32,7 | 5,2 | 28,9 | 150 |
| DKF H, ohne | 76 | 29,9 | 6,4 | 34,3 | 146 |
| DKF H 25 %) | 70 | 31,0 | 6,9 | 35,4 | 137 |

| | | | | | |
|---|---|---|---|---|---|
| * Vergleich: Dekorpapier mit Soll 30 Ma-% Ascheanteil | | | | | |

### Ergebnis:

Bei vergleichbarem Blattgewicht und Ascheanteil ist bei dem Muster enthaltend das organisch-anorganischen Composite sowohl die Nass- als auch Trockenbruchkraft höher bzw. die Harzaufnahme niedriger als bei den Vergleichsproben.

### Beispiel 3: UF-TiO₂ beschichteter kalzinierter Kaolin als Füllstoff zur Opazitätssteigerung von Dekopapier.

Dazu wird in einem ersten Schritt 50 g TiO₂ (z.B. Rutil, z.B. Fa. Kronos) mit 50 g UF-Harz (z.B. Kaurit 210, BASF) versetzt und sehr intensiv dispergiert. Im zweiten Schritt werden 100 g trockenes kalziniertes Kaolin (z.B. Dorkafill H, Fa. Gebrüder Dorfner, Hirschau) mit 30 g der zuvor hergestellten UF-TiO₂-Harz-Dispersion versetzt und intensiv gemischt, danach schonend getrocknet und pulverisiert. Aus dem resultierenden Produkt werden auf dem Laborblattbildner (Rapid Köthen) Dekorpapiermuster (70 g/m²) hergestellt. Der Sollaschegehalt beträgt 30 Ma-% TiO₂ (Vergleichsprobe). In den Versuchspapiermustern wurden 40 % des enthaltenen TiO₂ durch unbehandeltes kalziniertes Kaolin (DKF H ohne) bzw. organisch modifiziertes kalziniertes Kaolin (DKF H 30 % / 50 %) ausgetauscht. Die erhaltenen Laborblätter wurden danach wie dem Fachmann bekannt mit Flüssigharz getränkt und heiß gepresst (laminiert). Von den gepressten Mustern wurde die Opazität bestimmt.

**Tabelle 5: Messwerte Beispiel 3:**

| Muster | Papiergewicht | Ascheanteil | Trockenbruchkraft | Opazität |
|---|---|---|---|---|
| | g/m² | Ma-% | N | relativ |
| Vergleich* | 70 | 31,2 | 30,0 | 100% |
| DKF H, ohne | 71 | 32,1 | 30,3 | 70% |
| DKFH30%/50% | 73 | 32,1 | 31,4 | 98% |

| | | | | |
|---|---|---|---|---|
| * Vergleich: Dekorpapier mit Soll 30 Ma-% Ascheanteil | | | | |

### Ergebnis:

Bei vergleichbarem Blattgewicht und Ascheanteil ist bei dem Muster enthaltend das organisch-anorganischen TiO₂-Kalzinat-Composite die Opazität deutlich höher als bei der unbehandelten Nullprobe und annähernd auf dem Niveau wie die Vergleichsprobe, obwohl das organisch-anorganischen TiO₂-Kalzinat-Composite deutlich weniger TiO₂ als die Vergleichsprobe enthält. Daneben hat, wie im Beispiel zuvor, auch die Trockenbruchkraft deutlich zugenommen.

### Beispiel 4: Füllstoffe auf Basis von MF-Kaolin- bzw. MF-TiO₂-Composites als Füllstoff in Papier zur Herstellung formbarer, z.B. tiefziehfähiger Faserverbunde.

Dazu werden entweder 30 g Kaolin (z.B. Dorkafill X_pand, Fa. Gebrüder Dorfner, Hirschau) oder 30 g TiO₂ (z.B. Rutil, z.B. Fa. Kronos) mit jeweils 70 g UF-Harz-Pulver (z.B. Kaurit 287, BASF) intensiv trocken bei hoher Scherung gemischt und danach bei >50°C bevorzugt >80°C über einen Zeitraum >10 min gehalten und danach pulverisiert. Aus den resultierenden Produkten werden auf dem Laborblattbildner (Rapid Köthen) Papiermuster (80 g/m²) hergestellt (Sollaschegehalt: 40 Ma-%). Die erhaltenen Laborblätter wurden danach wie dem Fachmann bekannt analog Beispiel 3 (wie bei Dekorpapier üblich) heiß gepresst (laminiert) mit dem wesentlichen Unterschied, dass die Papiermuster vor dem Pressen nicht mit Flüssigharz getränkt worden waren, da die Papiermuster ja bereits Harz über den modifizierten Füllstoff enthalten.

### Ergebnis:

Obwohl die UF-Kaolin- bzw. UF-TiO₂-Composite enthaltenden Papiermuster nicht mit Flüssigharz getränkt worden waren, haben diese beim Pressen zu einer der Referenz (also einer flüssigharzgetränkten Papierprobe) entsprechenden Haftung nach den Pressen geführt. Mit entsprechend gefüllten Papiermustern ist als eine Formgebung, z.B. auch mittels Tiefziehen möglich. In einer speziellen Ausführung bevorzugt, wenn entsprechende Papiermuster vor dem Tiefziehen entweder mit Wasser befeuchtet oder mit einem Wachs oder einer Wachslösung, Stearinsäure, Öl und/oder anderen Fließverbesserern versetzt (bestäubt, besprüht, getaucht usw.) werden.

Die Beispiele zeigen, dass die Anforderungen an das erfindungsgemäße Produkt erfüllt werden. Folgende Vorteile können damit (u.a.) erzielt werden:

Vorteile in der Anwendung Papier, Auswahl:
- Festigkeitssteigerung, Blattgewichtsreduzierung
- Reduzierung der Harzaufnahme von Dekorpapier, Kosteneinsparung
- reduzierter Faserbedarf bei gleichen Festigkeitseigenschaften: Kostensenkung
- Steigerung Füllstoffanteil im Papier bei gleichen Festigkeitseigenschaften: Kostensenkung
- Retentionsverbesserung, Einsparung Prozesskosten, Kreislaufführung
- Opazitätsverbesserung, TiO₂-Einsparung
- Verbesserung Haptik, Porosität, Bedruckbarkeit, Tiefzähigkeit, Formbarkeit Verwendung finden Composites bestehend aus einem Träger und mindestens einer in und/oder auf dem Träger zumindest temporär fixierten organischen Komponente, wobei der Träger in mindestens einer Raumrichtung einen Durchmesser von weniger als 10 cm aufweist und die organische Komponente mindestens einen reaktiven Rest aufweist, der dazu geeignet ist, mindestens eine chemische Bindung auszubilden als Füllstoff in Papier zugesetzt wird, um eine Eigenschaft des Papiers welche insbesondere ausgewählt ist aus Festigkeit, Opazität, Ascheanteil, Nassbruch-kraft, Trockenbruchkraft, Harzaufnahme, Blattgewicht, Bruchwiderstand, Formbarkeit, Tiefziehfähigkeit, Füllstoffanteil, Retentionsverhalten, Porosität und Bedruckbarkeit zu verändern oder zur Herstellung formbarer Teile, im Automobil, in der Bauindustrie, in der Verpackungsindustrie, in Bauteilen, in Möbeln, in Rohren, in Farben oder in Polymeren eingesetzt wird.

Vorteile, andere Anwendungen
- Herstellung formbarer Teile, Automobil, Bau, Verpackung, Bauteile, Möbel, Rohre
- Opazitätssteigerung Anwendung in Farben und in Polymeren
- Festigkeitssteigerung: Farbe / Polymere / Holzwerkstoffe / Gehäuse / Elektroindustrie

Mögliche Anwendungen
- Herstellung von formbaren Faserverbundwerkstoffen
- Herstellung von tiefgezogenen Verpackungsartikeln aus diesem Faserverbund
- Herstellung von tiefgezogenen Bauteilen aus diesem Faserverbund z.B. zur Verwendung in der Möbel, Bau, Automobil-Industrie sowie der Elektroindustrie, z.B. zur Herstellung von Gehäuse aus diesem Faserverbund
- Herstellung neuartiger flächiger Werkstoffe aus diesem Faserverbund
- Herstellung: Tapetenpapier mit verbessertem Prägeverhalten, Formstabilität, Reißfestigkeit

Die beschriebenen reaktiven organisch-anorganischen Composites finden Verwendung z.B. bei der Herstellung, Verarbeitung oder Veredelung von Papier, Farbe- und Lack, Glas, Keramik, Holzwerkstoffen, Glas- oder Mineralfaserdämmmatten, Polymeren (Duroplasten, Thermoplasten und Elastomeren und deren Mischungen), Verbundwerkstoffen, Fussboden-und Wandanwendungen und führen dort zu technischen Vorteilen, wobei gleichzeitig die Overall-Kosten niedriger sind oder nur geringfügig steigen und zusätzlich ökologische Vorteile gegeben sind,

## Patentansprüche

1. Composite bestehend aus einem Träger und mindestens einer in und/oder auf dem Träger zumindest temporär fixierten organischen Komponente,
**dadurch gekennzeichnet, dass**
der Träger in mindestens einer Raumrichtung einen Durchmesser von weniger als 10 cm aufweist und die organische Komponente mindestens einen reaktiven Rest aufweist, der dazu geeignet ist, mindestens eine chemische Bindung auszubilden.

2. Composite nach Anspruch 1,
**dadurch gekennzeichnet, dass**
der reaktive Rest eine Polymerisationsreaktion eingehen kann oder während einer Polymerisationsreaktion durch mindestens eine kovalente Bindung in das Polymer integrierbar ist.

3. Composite nach Anspruch 1 oder 2,
**dadurch gekennzeichnet, dass**
der reaktive Rest eine reaktive Gruppe aufweist, die dazu geeignet ist, eine Vernetzungsreaktion mit einer das Composite umgebenden Matrix einzugehen.

4. Composite nach einem der vorangegangenen Ansprüche,
**dadurch gekennzeichnet, dass**
der Träger ausgewählt ist aus einer Gruppe, die eine Si-Verbindung, eine C-Verbindung, eine S-Verbindung, eine O-Verbindung, eine OH-haltige Verbindung, eine P-Verbindung und/oder Mischungen dieser umfasst und bevorzugt mindestens eine Si-Verbindung umfasst.

5. Composite nach einem der vorangegangenen Ansprüche,
**dadurch gekennzeichnet, dass**
die organische Komponente bevorzugt neben C-Atomen auch Heteroatome, bevorzugt O- und/oder N-Atome aufweist und besonders bevorzugt mindestens ein Amid, bevorzugt Harnstoff oder Melamin, als Monomer und/oder ein daraus und/oder aus Acrylgruppen enthaltenden Monomeren gebildetes Oligomer und/oder niedermolekulare Reaktionsprodukte von Polycarbonsäuren mit einem multifunktionalen Alkohol mit einer molaren Masse von weniger als 150000 g/mol, bevorzugt weniger als 120000 g/mol, besonders bevorzugt weniger als 100000g/mol umfasst.

6. Composite nach Anspruch 5,
**dadurch gekennzeichnet, dass**
die organische Komponente weiterhin mindestens eine weitere organische, polymerisierbare Komponente umfasst, welche bevorzugt einen substituierten oder unsubstituierten Phenylrest, einen substituierten oder unsubstituierten Benzylrest, einen substituierten oder unsubstituierten Vinylrest, Styrol oder dessen Derivate und/oder Ethylenoxid oder dessen Derivate umfasst, und welche bevorzugt oligomerisiert ist und/oder ein Oligomer mit einer molaren Masse von weniger als 5000 150000 g/mol, bevorzugt weniger als 2500 120000 g/mol, besonders bevorzugt weniger als 100000 g/mol ist.

7. Composite nach einem der vorangegangenen Ansprüche,
**dadurch gekennzeichnet, dass**
der reaktive Rest der organische Komponente eine chemische Reaktivität aufweist, die es diesem ermöglicht, mit sich selbst oder mit einer anderen reaktiven Gruppe, welche bevorzugt ausgewählt ist aus Hydroxid-, Aldehyd-, Keto-, Carbonsäure-, VinylGruppen, Alkanen, Alkenen oder Alkinen, zyklischen Verbindungen, reaktionsfähigen Monomeren, reaktionsfähigen Oligomeren, reaktionsfähigen Polymeren und/oder Mischungen dieser, besonders bevorzugt aus Amiden und/oder Aldehyden und/oder Acrylaten und/oder niedermolekularen Reaktionsprodukten von Polycarbonsäuren mit einem multifunktionalen Alkohol, eine Bindung einzugehen.

8. Composite nach einem der vorangegangenen Ansprüche,
**dadurch gekennzeichnet, dass**
der Träger eine Cellulosefaser oder einen partikulären anorganischen Partikel umfasst.

9. Composite nach einem der vorangegangenen Ansprüche,
**dadurch gekennzeichnet, dass**
auf dem Träger neben der organische Komponente mit mindestens einen reaktiven Rest mindestens ein Additiv angeordnet ist, welches bevorzugt nicht durch kovalente Bindung an den Träger gebunden ist.

10. Composite nach einem der vorangegangenen Ansprüche,
**dadurch gekennzeichnet, dass**
auf dem Träger neben der organische Komponente mit mindestens einen reaktiven Rest mindestens ein Additiv angeordnet ist.

11. Verfahren zur Herstellung eines Composites bestehend aus einem Träger und mindestens einer in und/oder auf dem Träger zumindest temporär fixierten organischen Komponente, wobei der Träger in mindestens einer Raumrichtung einen Durchmesser von weniger als 10 cm aufweist
**dadurch gekennzeichnet, dass**
der Träger in trockener oder suspendierter Form mit einer trockenen, flüssigen, suspendierten oder gelösten organische Komponente mit mindestens einem reaktiven Rest, der dazu geeignet ist, mindestens eine chemische Bindung auszubilden, versetzt wird, um diese an den Träger anzulagern und/oder in den Träger einzulagern und die organische Komponente anschließend auf dem Träger gebunden wird.

12. Verfahren zur Herstellung eines Composites nach Anspruch 11
**dadurch gekennzeichnet, dass**
als reaktive organische Komponente ein Monomer oder Oligomer verwendet wird, das bevorzugt neben C-Atomen auch Heteroatome, bevorzugt O- und/oder N-Atome aufweist und besonders bevorzugt mindestens ein Amid, bevorzugt Harnstoff oder Melamin, als Monomer und/oder ein daraus und/oder aus Acrylgruppen enthaltenden Monomeren gebildetes Oligomer und/oder niedermolekularen Reaktionsprodukten von Polycarbonsäuren mit einem multifunktionalen Alkohol mit einer molaren Masse von weniger als 150000 g/mol, bevorzugt weniger als 120000g/mol, besonders bevorzugt weniger als 100000g/mol umfasst.

13. Verfahren zur Herstellung eines Composites nach Anspruch 11 oder 12
**dadurch gekennzeichnet, dass**
als reaktive organische Komponente ein Monomer oder Oligomer verwendet wird und dieses unter Zusatz einer weiteren Komponente eine Polymerisationsreaktion eingeht und auf der Oberfläche des Trägers fixiert wird.

14. Verfahren zur Herstellung eines Composites nach Anspruch 11 oder 12
**dadurch gekennzeichnet, dass**
als reaktive organische Komponente ein Oligomer oder Vorpolymer verwendet wird und dieses durch Trocknung auf der Oberfläche des Trägers fixiert wird.

15. Verwendung eines Composites bestehend aus einem Träger und mindestens einer in und/oder auf dem Träger zumindest temporär fixierten organischen Komponente, wobei der Träger in mindestens einer Raumrichtung einen Durchmesser von weniger als 10 cm aufweist und die organische Komponente mindestens einen reaktiven Rest aufweist, der dazu geeignet ist, mindestens eine chemische Bindung auszubilden **dadurch gekennzeichnet, dass**
das Composite als Füllstoff in Papier zugesetzt wird, um eine Eigenschaft des Papiers welche insbesondere ausgewählt ist aus Festigkeit, Opazität, Ascheanteil, Nassbruch-kraft, Trockenbruchkraft, Harzaufnahme, Blattgewicht, Bruchwiderstand, Formbarkeit, Tiefziehfähigkeit, Füllstoffanteil, Retentionsverhalten, Porosität und Bedruckbarkeit zu verändern oder zur Herstellung formbarer Teile, im Automobil, in der Bauindustrie, in der Verpackungsindustrie, in Bauteilen, in Möbeln, in Rohren, in Farben oder in Polymeren eingesetzt wird.
